# FASCICULE DE BREVET EUROPEEN

(11) **EP 0 969 410 B1**
(45) Date de publication et mention de la délivrance du brevet: **23.12.2009**
(21) Numéro de dépôt: 99401518.8
(22) Date de dépôt: 18.06.1999
(51) Int. Cl.: G06K 19/077

(54) **Carte à microcircuit incluant une antenne**
Chipkarte mit Antenne
Chip card comprising an antenna

(30) Priorité: 03.07.1998 FR 9808533
(43) Date de publication de la demande: 05.01.2000
(73) Titulaire: OBERTHUR TECHNOLOGIES, 92300 Levallois Perret (FR)
(72) Inventeur: Launay, François, 14610 Epron (FR)
(74) Mandataire: Santarelli

(56) Documents cités:
- DE-A- 19 621 044
- DE-A- 19 642 378
- FR-A- 2 610 754

## Description

L'invention se rapporte à un procédé de fabrication d'une carte à microcircuit du type comprenant une antenne en forme de bobine plate connectée audit microcircuit.

L'invention a principalement pour but de résoudre des problèmes spécifiques de connexion entre le microcircuit et l'antenne.

L'invention concerne également une carte à microcircuit obtenue par mise en oeuvre de ce procédé.

Le principe d'une carte à microcircuit qui fonctionne grâce à des données transmises sans contact au moyen d'une antenne en forme de bobine plate intégrée dans l'épaisseur de la carte, est connu. Certaines de ces cartes sont même combinées avec des plages de raccordement extérieur, métalliques, elles-mêmes connectées au microcircuit, permettant d'utiliser la carte soit avec un terminal dit "sans contact", soit avec un terminal muni d'un dispositif de raccordement à contacts électriques, classique.

Le plus souvent, lorsqu'on réalise une carte à microcircuit du type sans contact, on élabore un module dans lequel le microcircuit est collé sur une grille conductrice. Des connexions électriques sont établies par soudure de fils électriques très fins entre les plages de connexion du microcircuit et la grille conductrice. Ces connexions sont protégées par moulage d'une résine enrobant le microcircuit et les fils. Le module ainsi réalisé est relié électriquement aux extrémités d'une bobine formant antenne préalablement déposée sur un support en matière plastique. Le microcircuit et son enrobage de résine sont logés dans l'épaisseur d'une fenêtre dudit support, tandis que la grille conductrice est soudée à l'antenne déposée sur ce support. Ce type de montage implique donc de prévoir au moins une couche de compensation d'épaisseur recouvrant le support du côté de l'antenne, pour tenir compte de la surépaisseur due à la grille conductrice. Généralement, on prévoit encore deux autres feuilles de part et d'autre de cette structure. Ce type de fabrication est coûteux car il nécessite la réalisation à part d'un module et un laminage multicouches délicat à mettre en oeuvre.

D'autres solutions ont été envisagées. Par exemple, la demande de brevet européen N° 0 737 935 décrit un procédé permettant de s'affranchir de la réalisation d'un module. Le microcircuit est directement collé sur le support de la bobine et les plages de connexion du microcircuit sont reliées électriquement aux extrémités de la bobine par des fils soudés. En revanche, il reste impératif de protéger le microcircuit par une résine de protection. La surépaisseur créée sur le support doit être compensée comme précédemment. Ces opérations sont délicates et coûteuses. Le même document envisage une autre possibilité où le microcircuit est monté retourné et chevauche la bobine pour que les plages de connexion du microcircuit puissent être raccordées à des extrémités de la bobine. Ceci supprime la soudure des fils, mais le nombre de spires de la bobine est limité par la taille du microcircuit qui la chevauche. Les problèmes de compensation par laminage multicouches restent délicats à maîtriser. Le même document antérieur envisage aussi le cas d'un microcircuit monté retourné (technique dite "flip-chip") mais ne chevauchant pas les spires. Dans ce cas, une piste conductrice traverse le support de la bobine, s'étend au travers de la zone des spires sur la face opposée de ce support et repasse au niveau du plan de l'antenne en traversant à nouveau l'épaisseur du support. Cette technique fait appel à des méthodes coûteuses de métallisation double-face et ne résout pas les problèmes liés à la compensation.

Par ailleurs, le document DE 44 31 606 décrit une structure dans laquelle l'antenne chevauche le microcircuit par sa face supérieure. Ce microcircuit est inséré dans une cavité. Cependant, la face active du microcircuit (où se trouvent les plages de connexion) est mal protégée ou la protection de celle-ci demande une opération supplémentaire. Cet agencement ne résout pas le problème de la limitation du nombre de spires de la bobine imposé par la taille du microcircuit.

Le document DE 19621044 présente plusieurs modes de réalisation pour former une carte à microcircuit grâce au dépôt du microcircuit dans une cavité de la carte remplie par la suite, et au report d'un film définissant des surfaces de contact et, dans un mode de réalisation, une bobine.

Le document FR 2610754 décrit quant à lui une carte à microcircuit dans lequel des enroulements d'un transducteur électromagnétique sont formés sur une partie d'un substrat plus épaisse que la partie sur laquelle sont formées des plages de connexion.

L'invention propose un procédé de fabrication d'une carte à microcircuit du genre considéré dans lequel les opérations nécessaires sont plus simples, moins nombreuses et moins coûteuses que dans l'un des processus antérieurs connus.

Un autre but de l'invention est de proposer un procédé dans lequel le nombre de spires de la bobine formant antenne n'est pas limité par les dimensions du microcircuit.

Plus précisément, l'invention concerne un procédé de fabrication d'une carte à microcircuit comprenant une antenne formant bobine plate, connectée audit microcircuit, ce dernier comportant des plages de connexion, caractérisé par les opérations consistant :
- à élaborer un support plat muni d'une cavité ouverte sur une face de celui-ci, dimensionnée pour au moins abriter ledit microcircuit et d'un prolongement latéral de ladite cavité, s'étendant dans une zone où doit se situer ladite antenne,
- à élaborer au moins deux pistes conductrices s'étendant entre le fond de ladite cavité et ladite face, l'une des pistes s'étendant aussi au fond dudit prolongement,
- à fixer et connecter ledit microcircuit dans ladite cavité en sorte que ses plages de connexion soient électriquement connectées aux extrémités desdites pistes situées dans la cavité,
- à combler ladite cavité et son prolongement par un matériau isolant, et
- à déposer ladite antenne sur ladite face dudit support en sorte que ses extrémités soient respectivement raccordées aux extrémités desdites pistes situées sur ladite face.

Selon une caractéristique avantageuse du procédé, le microcircuit est monté retourné dans la cavité par une opération connue de l'homme de l'art sous le terme "flip-chip" de façon que ses plages de raccordement soient respectivement directement en regard des extrémités de piste situées dans la cavité.

Des bossages conducteurs peuvent être définis entre lesdites extrémités des pistes et lesdites plages de raccordement ; ils peuvent être définis sur ces dernières avant le montage dit "flip-chip".

Selon des variantes possibles, le microcircuit peut être fixé par soudure de ses plages de connexion aux extrémités des pistes situées dans la cavité éventuellement par l'intermédiaire des bossages. Il peut être collé dans la cavité. Si la colle est isolante, les plages de connexion sont en contact électrique direct avec les extrémités des pistes situées dans la cavité, par l'intermédiaire de tels bossages. On peut aussi utiliser une colle anisotrope auquel cas, les liaisons électriques sont assurées par la colle elle-même, par exemple entre de tels bossages et les extrémités des pistes situées dans la cavité. Les bossages peuvent aussi être définis aux extrémités des pistes.

Le prolongement de la cavité peut avoir la forme d'une gorge rectiligne dont une extrémité communique latéralement avec cette cavité. Cependant, on peut aussi prévoir une cavité allongée dans une direction, ladite cavité ne se distinguant pas, à proprement parler, de son prolongement. On comprend que le fait de combler la cavité et son prolongement par un matériau isolant, par exemple une résine de protection du type polymérisant aux ultraviolets, permet à la fois de protéger le microcircuit et de reconstituer un support plat sur lequel l'antenne peut être déposée. Le raccordement entre les extrémités de la bobine formant antenne et les extrémités émergentes des pistes précitées ne pose aucun problème technique et le nombre de spires de la bobine ne dépend plus de la dimension du microcircuit puisque la piste qui est engagée dans le prolongement et qui passe sous l'ensemble des spires, peut être de n'importe quelle longueur voulue.

Les pistes comme l'antenne peuvent être réalisées, (à deux stades différents du procédé), par tampographie d'encre conductrice ou par estampage à chaud d'une feuille métallique. Cependant, l'antenne peut être aussi réalisée par fixation d'un fil conducteur sur la face du support ou par photogravure ou sérigraphie.

Après dépôt et raccordement de l'antenne, une couche de protection en matériau isolant est de préférence déposée sur ladite face du support portant l'antenne. Cette couche de protection peut être déposée par laminage d'une feuille de matière plastique ou par moulage de matière plastique sur ledit support plat.

L'invention concerne également une carte à microcircuit du type comprenant une antenne formant bobine plate, connectée audit microcircuit, ce dernier comportant des plages de connexion, et étant logé dans une cavité remplie d'un matériau isolant dimensionnée pour au moins abriter un tel microcircuit, **caractérisée en ce que** cette cavité remplie de matériau isolant comporte un prolongement latéral rempli du matériau isolant et s'étendant jusque dans une zone où se trouve ladite antenne, en ce que des pistes conductrices s'étendent entre le fond de ladite cavité remplie de matériau isolant et un plan où se trouve posée ladite antenne, l'une des pistes s'étendant au fond dudit prolongement, en ce que lesdites plages de connexion du microcircuit sont connectées aux extrémités des pistes situées dans la cavité remplie de matériau isolant tandis que les extrémités de ladite antenne sont connectées aux extrémités des pistes situées sur ledit plan et en ce que des parties de ladite antenne reposent sur le matériau isolant remplissant ledit prolongement.

L'invention sera mieux comprise et d'autres avantages de celle-ci apparaîtront plus clairement à la lumière de la description qui va suivre des principales phases de réalisation d'une carte à microcircuit du type sans contact, conforme à son principe, donnée uniquement à titre d'exemple et faite en référence aux dessins annexés dans lesquels :

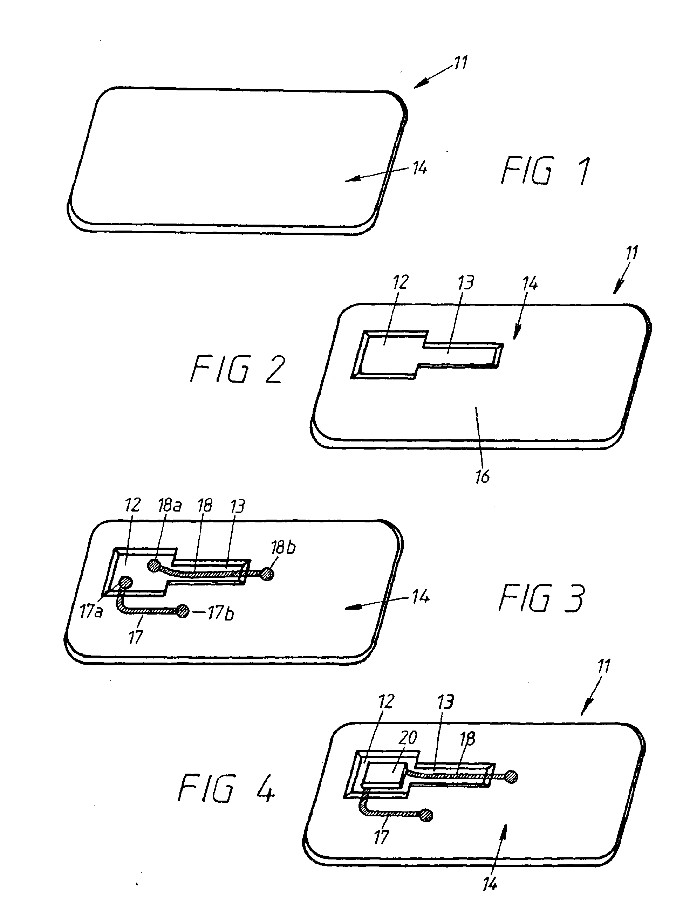

- les figures 1 à 7 illustrent, dans l'ordre, les principales phases de la réalisation d'une carte à microcircuit du type sans contact, mettant en oeuvre le procédé conforme à l'invention.

Pour la mise en oeuvre du procédé, on peut partir d'un support 11 en matière plastique isolante telle que représenté sur la figure 1, ou d'une feuille de matière plastique de même épaisseur qui sera découpée ultérieurement aux bonnes dimensions. L'épaisseur de ce support est du même ordre de grandeur que celle de la carte que l'on désire réaliser.

La figure 2 illustre la première opération spécifique de l'invention, qui consiste à réaliser une cavité 12 ouverte sur une face 14 de ce support et un prolongement latéral 13 de ladite cavité, ouvert aussi sur la face 14.

Plus précisément, la cavité 12 est dimensionnée pour au moins abriter le microcircuit tandis que le prolongement latéral 13 a ici la forme d'une gorge débouchant latéralement dans la cavité et s'étendant dans une zone 16 du support où doit se situer une antenne en forme de bobine plate qui sera décrite plus loin. Le prolongement peut avoir différentes formes. On peut par exemple imaginer une simple extension de la longueur de la cavité pourvu qu'elle s'étende dans la zone 16 du support où sera ultérieurement déposée l'antenne. La cavité peut être réalisée par toute technique connue, par exemple par pressage à chaud, au moyen d'un outil de forme adaptée ou par usinage (mécanique ou à l'aide d'un dispositif à faisceau laser). Les bords de la cavité et de son prolongement sont avantageusement chanfreinés, comme représenté.

En variante, la cavité peut être définie par assemblage de deux feuilles, par exemple par laminage, une feuille ayant une fenêtre dont le contour définit à la fois ladite cavité et ledit prolongement.

La figure 3 illustre l'opération suivante consistant à élaborer au moins deux pistes conductrices 17, 18 s'étendant entre le fond de la cavité et la face supérieure du support sur laquelle s'ouvre ladite cavité et ledit prolongement. Chaque piste comporte un plot de raccordement 17a, 18a s'étendant au fond de la cavité et un plot de raccordement 17b, 18b s'étendant sur la face du support. En outre, il est important de noter que l'une des pistes (la piste 18) s'étend aussi au fond dudit prolongement 13 et que les deux plots de raccordement 17b, 18b, situés sur la face 14 peuvent ainsi être séparés d'une distance indépendante de la distance séparant les deux plots 17a, 18a situés au fond de la cavité 12, laquelle distance est conditionnée par la forme et les dimensions du microcircuit, plus précisément les emplacements de ses plages de raccordement.

Les pistes conductrices 17, 18 et leurs plots peuvent être réalisés par des méthodes diverses telles que la photogravure ou la métallisation par autocatalyse. Comme mentionné précédemment, on utilise de préférence la tampographie d'une encre conductrice ou l'estampage à chaud d'une feuille métallique.

L'opération suivante illustrée sur la figure 4 consiste à fixer et connecter le microcircuit 20 dans la cavité 12, en sorte que ses plages de connexion soient électriquement connectées aux extrémités des pistes situées dans la cavité. Ici, le microcircuit 20 est monté retourné dans la cavité par une opération connue dans la technique sous le terme "flip-chip" en sorte que ses plages de raccordement soient directement en regard des extrémités de piste situées dans la cavité, c'est-à-dire les plots 17a, 18a.

Pour la connexion électrique, des bossages conducteurs, par exemple métalliques, peuvent avoir été préalablement déposés sur les plages de connexion du microcircuit. Le microcircuit peut être fixé par soudure de ses plages de connexion aux plots 17a, 18a desdites pistes situées dans la cavité. Ceci s'applique notamment si les plages de connexion sont munies de bossages conducteurs. Le microcircuit peut aussi être collé dans la cavité. Si on utilise une colle isolante, les plages de connexion seront en contact électrique direct avec les extrémités des pistes situées dans la cavité, par l'intermédiaire de tels bossages conducteurs. On peut aussi utiliser une colle anisotrope, avantageusement aussi en présence de bossages conducteurs. On peut encore utiliser une colle conductrice localisée aux emplacements des plages de connexion.

En variante, le microcircuit peut être fixé au fond de la cavité par son autre face, c'est-à-dire celle qui ne comporte pas les plages de connexion, et les liaisons électriques entre les plots 17a, 18a et lesdites plages de connexion peuvent être effectuées par soudure de fils conducteurs fins, notamment des fils d'or. Dans cette variante, le microcircuit est collé à côté des plots, les dimensions de la cavité 12 étant déterminées en conséquence.

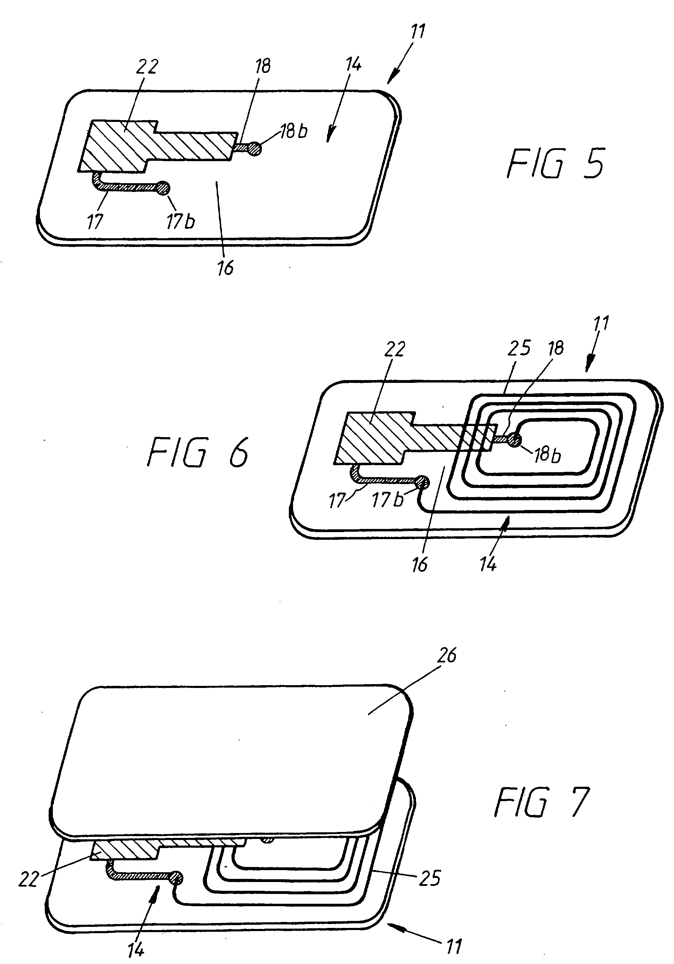

La figure 5 illustre la phase suivante qui consiste à combler la cavité 12 et son prolongement 13 par un matériau isolant 22.

On peut utiliser une résine ayant une haute pureté ionique pour protéger le microcircuit de l'humidité. Cette résine doit être peu visqueuse au moment de la mise en oeuvre pour s'étaler facilement de façon que la surface constituée par la cavité et son prolongement remplis de résine et la surface du support 11 proprement dit soient le plus plat possible. On peut utiliser une résine polymérisant sous l'action de la chaleur et faire subir un traitement thermique au support. De préférence, on utilisera une résine polymérisant sous rayonnement ultraviolet et on soumettra ledit support à un tel rayonnement pour faire durcir la résine.

A partir de ce moment, le support peut recevoir l'antenne 25 formant bobine plate (figure 6). L'antenne pourra être réalisée par tampographie ou sérigraphie d'encre conductrice, ces techniques étant d'utilisation simple et pouvant facilement être mises en oeuvre dans une ligne de montage. Ces techniques sont aussi préférables compte tenu du fait que la réalisation de la bobine s'effectue après le montage du microcircuit. On peut cependant aussi réaliser cette antenne par photogravure ou estampage à chaud d'une feuille métallique sur le support.

Enfin, la figure 7 illustre une dernière opération consistant à recouvrir ladite face 14 du support 11 d'une couche ou feuille de protection 26 en matériau isolant. Cette couche ou feuille peut être d'épaisseur notablement inférieure à celle du support. Elle peut être déposée par laminage d'une feuille de matière plastique ou moulage de matière plastique sur le support plat.

Il ressort clairement de la description qui précède que l'invention permet d'éviter la réalisation de couches de matière plastique intermédiaire nécessaires antérieurement pour compenser d'éventuelles surépaisseurs créées par un microcircuit ou certaines parties d'un module le comportant. De plus, il est plus facile avec le procédé mis en oeuvre conformément à l'invention, de contrôler la géométrie de l'enrobage du microcircuit, la résine restant naturellement confinée dans la cavité et son prolongement. Le procédé est simplifié notamment par le fait que l'isolement de la piste ne nécessite pas d'opération spécifique supplémentaire puisqu'il est effectué au moment du remplissage de la cavité et de son prolongement, en une même opération de toute façon nécessaire pour protéger le microcircuit.

Enfin, il est important de noter que, dans le cas d'un montage du type "flip-chip", les dimensions du microcircuit ne limitent pas le nombre de spires de la bobine puisque les spires ne doivent plus impérativement passer entre les plages de connexion définies à la surface du microcircuit.

## Revendications

1. Procédé de fabrication d'une carte à microcircuit comprenant une antenne formant de bobine plate, connectée audit microcircuit, ce dernier comportant des plages de connexion, le procédé comprenant les opérations suivantes:
- élaborer un support plat muni d'une cavité (12) ouverte sur une face (14) de celui-ci, dimensionnée pour au moins abriter ledit microcircuit et d'un prolongement latéral (13) de ladite cavité, s'étendant dans une zone (16) où doit se situer ladite antenne,
- élaborer au moins deux pistes conductrices (17, 18) s'étendant entre le fond de ladite cavité et ladite face, l'une des pistes s'étendant aussi au fond dudit prolongement,
- fixer et connecter ledit microcircuit (20) dans ladite cavité (12) en sorte que ses plages de connexion soient électriquement connectées aux extrémités desdites pistes situées dans la cavité,
- combler ladite cavité et son prolongement par un matériau isolant (22), et
- déposer ladite antenne (25) sur ladite face dudit support en sorte que ses extrémités soient respectivement raccordées aux extrémités desdites pistes situées sur ladite face.

2. Procédé selon la revendication 1, **caractérisé en ce qu'**il consiste en outre et subséquemment aux opérations précitées, à recouvrir ladite face (14) d'une couche ou feuille de protection (26) en matériau isolant.

3. Procédé selon la revendication 1 ou 2, **caractérisé en ce que** ledit microcircuit (20) est monté retourné dans ladite cavité par une opération connue en soi dite "flip-chip" en sorte que ses plages de raccordement soient directement en regard desdites extrémités de piste situées dans ladite cavité.

4. Procédé selon la revendication 3, **caractérisé en ce qu'**on forme des bossages conducteurs, par exemple métalliques, sur les plages de connexion dudit microcircuit avant l'opération dite "flip-chip".

5. Procédé selon la revendication 3 ou 4, **caractérisé en ce que** ledit microcircuit (20) est fixé par soudure de ses plages de connexion aux extrémités desdites pistes situées dans la cavité.

6. Procédé selon la revendication 3 ou 4, **caractérisé en ce que** ledit microcircuit (20) est collé dans ladite cavité.

7. Procédé selon la revendication 6, **caractérisé en ce que** ledit microcircuit (20) est collé avec une colle isolante et **en ce que** ses plages de connexion sont en contact électrique avec les extrémités des pistes situées dans ladite cavité.

8. Procédé selon la revendication 6, **caractérisé en ce que** ledit microcircuit (20) est collé avec une colle anisotrope.

9. Procédé selon la revendication 1 ou 2, **caractérisé en ce qu'**on fixe ledit microcircuit au fond de la cavité par sa face qui ne comporte pas les plages de connexion et **en ce qu'**on relie celles-ci aux extrémités des pistes situées dans la cavité par des fils conducteurs.

10. Procédé selon l'une des revendications précédentes, **caractérisé en ce que** l'opération consistant à combler ladite cavité et son prolongement consiste à remplir celle-ci d'une résine de protection (22) du type polymérisant aux ultraviolets et à soumettre ledit support à un tel rayonnement ultraviolet.

11. Procédé selon l'une des revendications précédentes, **caractérisé en ce que** lesdites pistes (17, 18) sont réalisées par tampographie d'encre conductrice.

12. Procédé selon l'une des revendications précédentes, **caractérisé en ce que** ladite antenne (25) est réalisée par tampographie ou sérigraphie d'encre conductrice.

13. Procédé selon l'une des revendications 1 à 11, **caractérisé en ce que** ladite antenne est réalisée par fixation d'un fil conducteur sur ladite face.

14. Procédé selon l'une des revendications 1 à 11, **caractérisé en ce que** ladite antenne est réalisée par estampage à chaud d'une feuille de matériau conducteur.

15. Procédé selon l'une des revendications 2 à 14, **caractérisé en ce que** ladite couche de protection (26) est déposée par laminage d'une feuille de matière plastique.

16. Procédé selon l'une des revendications 2 à 14, **caractérisé en ce que** ladite couche de protection (26) est définie par moulage de matière plastique sur ledit support plat.

17. Carte à microcircuit du type comprenant une antenne (25) formant bobine plate, connectée audit microcircuit, ce dernier comportant des plages de connexion, et étant logé dans une cavité remplie d'un matériau isolant (22) dimensionnée pour au moins abriter un tel microcircuit, **caractérisée en ce que** cette cavité remplie de matériau isolant comporte un prolongement latéral (13) rempli du matériau isolant et s'étendant jusque dans une zone où se trouve ladite antenne, **en ce que** des pistes conductrices (17, 18) s'étendent entre le fond de ladite cavité remplie de matériau isolant et un plan où se trouve posée ladite antenne, l'une des pistes s'étendant au fond dudit prolongement, **en ce que** lesdites plages de connexion du microcircuit sont connectées aux extrémités des pistes situées dans la cavité remplie de matériau isolant tandis que les extrémités de ladite antenne (25) sont connectées aux extrémités des pistes situées sur ledit plan et **en ce que** des parties de ladite antenne reposent sur le matériau isolant remplissant ledit prolongement.

18. Carte à microcircuit selon la revendication 17, **caractérisée en ce que** le plan de la cavité où est posée ladite antenne est recouvert d'une couche ou feuille de protection (26) en matériau isolant.

19. Carte à microcircuit selon la revendication 17 ou 18, **caractérisée en ce que** ledit microcircuit (20) est monté retourné dans ladite cavité en sorte que ses plages de raccordement soient directement en regard desdites extrémités de piste situées dans ladite cavité.

20. Carte à microcircuit selon la revendication 18, **caractérisée en ce que** des bossages conducteurs, par exemple métalliques, sont intercalés entre les plages de connexion du microcircuit et les extrémités correspondantes desdites pistes.

21. Carte à microcircuit selon la revendication 19, **caractérisée en ce que** ledit microcircuit (20) est collé dans ladite cavité.

22. Carte à microcircuit selon la revendication 19 ou 20, **caractérisée en ce que** ledit microcircuit (20) est collé avec une colle isolante et **en ce que** ses plages de connexion sont en contact électrique avec les extrémités des pistes situées dans ladite cavité.

23. Carte à microcircuit selon la revendication 19 ou 20, **caractérisée en ce que** ledit microcircuit (20) est collé avec une colle anisotrope.

24. Carte à microcircuit selon la revendication 17 ou 18, **caractérisée en ce que** ledit microcircuit est fixé au fond de ladite cavité par sa face qui ne comporte pas lesdites plages de connexion et **en ce que** celles-ci sont reliées aux extrémités des pistes situées dans la cavité, par des fils conducteurs.

## Claims

1. Method of fabrication of a microcircuit card comprising an antenna forming flat coil, connected to said microcircuit, the latter including connection lands, the method comprising the following operations:
- producing a flat support provided with a cavity (12) open on one face (14) thereof, sized at least to accommodate said microcircuit and a lateral extension (13) of said cavity, in an area (16) where said antenna must be situated,
- producing at least two conductive tracks (17, 18) between the bottom of said cavity and said face, one of the tracks being also at the bottom of said extension,
- fixing and connecting said microcircuit (20) in said cavity (12) so that its connection lands are electrically connected to the ends of said tracks situated in the cavity,
- filling said cavity and its extension with an insulative material (22), and
- depositing said antenna (25) on said face of said support so that its ends are connected to respective ends of said tracks situated on said face.

2. Method according to claim 1, **characterised in that** it consists further and subsequently to the aforementioned operations in covering said face (14) with a protection layer or film (26) of insulative material.

3. Method according to claim 1 or 2, **characterised in that** said microcircuit (20) is mounted upside-down in said cavity by a "flip-chip" operation known in itself so that its connection lands directly face said track ends situated in said cavity.

4. Method according to claim 3, **characterised in that** conductive, for example metal, bosses are formed on the connection lands of said microcircuit before the "flip-chip" operation.

5. Method according to claim 3 or 4, **characterised in that** said microcircuit (20) is fixed by soldering its connection lands to the ends of said tracks situated in the cavity.

6. Method according to claim 3 or 4, **characterised in that** said microcircuit (20) is glued in said cavity.

7. Method according to claim 6, **characterised in that** said microcircuit (20) is glued with an insulative glue and **in that** its connection lands are in electrical contact with the ends of the tracks situated in said cavity.

8. Method according to claim 6, **characterised in that** said microcircuit (20) is glued with an anisotropic glue.

9. Method according to claim 1 or 2, **characterised in that** said microcircuit is fixed to the bottom of the cavity by its face that does not include the connection lands and **in that** the latter are connected to the ends of the tracks situated in the cavity by conductive wires.

10. Method according to any of the preceding claims, **characterised in that** the operation consisting in filling said cavity and its extension consists in filling the latter with a protection resin (22) of the type polymerised by ultraviolet and subjecting said support to such ultraviolet radiation.

11. Method according to any of the preceding claims, **characterised in that** said tracks (17, 18) are produced by stamping with conductive ink.

12. Method according to any of the preceding claims, **characterised in that** said antenna (25) is produced by stamping or screen-printing with conductive ink.

13. Method according to any of claims 1 to 11, **characterised in that** said antenna is produced by fixing a conductive wire to said face.

14. Method according to any of claims 1 to 11, **characterised in that** said antenna is produced by hot stamping a conductive metal foil.

15. Method according to any of claims 2 to 14, **characterised in that** said protection layer (26) is deposited by laminating a film of plastic material.

16. Method according to any of claims 2 to 14, **characterised in that** said protection layer (26) is defined by moulding plastic material on said flat support.

17. Microcircuit card of the type comprising an antenna (25) forming flat coil, connected to said microcircuit, the latter including connection lands, and being accommodated in a cavity filled with an insulative material (22) sized at least to accommodate such a microcircuit, **characterised in that** this cavity filled with insulative material includes a lateral extension (13) filled with the insulative material and extending to an area in which said antenna is situated, **in that** conductive tracks (17, 18) extend between the bottom of said cavity filled with insulative material and a plane on which said antenna is placed, one of the tracks being at the bottom of said extension, **in that** said connection lands of the microcircuit are connected to the ends of the tracks situated in the cavity filled with insulative material and the ends of said antenna (25) are connected to the ends of the tracks situated on said plane and **in that** parts of said antenna rest on the insulative material filling said extension.

18. Microcircuit card according to claim 17, **characterised in that** the plane of the cavity where said antenna is placed is covered with a protection layer or film (26) of insulative material.

19. Microcircuit card according to claim 17 or 18, **characterised in that** said microcircuit (20) is mounted upside-down in said cavity so that its connection lands directly face said track ends situated in said cavity.

20. Microcircuit card according to claim 18, **characterised in that** conductive, for example metal, bosses are interleaved between the connection lands of the microcircuit and the corresponding ends of said tracks.

21. Microcircuit card according to claim 19, **characterised in that** said microcircuit (20) is glued in said cavity.

22. Microcircuit card according to claim 19 or 20, **characterised in that** said microcircuit (20) is glued with an insulative glue and **in that** its connection lands are in electrical contact with the ends of the tracks situated in said cavity.

23. Microcircuit card according to claim 19 or 20, **characterised in that** said microcircuit (20) is glued with an anisotropic glue.

24. Microcircuit card according to claim 17 or 18, **characterised in that** said microcircuit is fixed to the bottom of said cavity by its face that does not include said connection lands and **in that** the latter are connected to the ends of the tracks situated in the cavity by conductive wires.

## Patentansprüche

1. Verfahren zur Herstellung einer Karte mit Mikroschaltung, die eine, eine Flachspule bildende Antenne umfasst, die mit der Mikroschaltung verbunden ist, wobei Letztgenannte Anschlussbereiche aufweist, wobei das Verfahren die folgenden Arbeitsabläufe umfasst:
- Ausarbeiten eines flachen Trägers, der mit einem offenen Hohlraum (12) auf einer Fläche (14) von diesem, welcher Hohlraum dazu bemessen ist, die Mikroschaltung schützend aufzunehmen, und einer seitlichen Verlängerung (13) des Hohlraums versehen ist, die sich in eine Zone (16) erstreckt, in der sich die Antenne befinden soll,
- Ausarbeiten von mindestens zwei Leiterbahnen (17, 18), die sich zwischen dem Grund des Hohlraums und der besagten Fläche erstrecken, wobei eine der Bahnen sich auch zum Grund der Verlängerung erstreckt,
- Befestigen und Anschließen der Mikroschaltung (20) in dem Hohlraum (12), und zwar so, dass ihre Anschlussbereiche elektrisch an die Enden der im Hohlraum befindlichen Bahnen angeschlossen sind,
- Ausfüllen des Hohlraums und seiner Verlängerung mit einem isolierenden Material (22), und
- Ablegen der Antenne (25) auf der besagten Fläche des Trägers, und zwar so, dass ihre Enden jeweils mit den Enden der auf der besagten Fläche befindlichen Bahnen verbunden sind.

2. Verfahren nach Anspruch 1, **dadurch gekennzeichnet, dass** es zusätzlich zu den vorgenannten Arbeitsabläufen und anschließend an die vorgenannten Arbeitsabläufe darin besteht, die besagte Fläche (14) mit einer Schutzschicht oder -folie (26) aus isolierendem Material zu bedecken.

3. Verfahren nach Anspruch 1 oder 2, **dadurch gekennzeichnet, dass** die Mikroschaltung (20) durch einen an sich bekannten, "flip-chip" genannten, Arbeitsablauf mit der Rückseite so in dem Hohlraum angebracht wird, dass ihre Anschlussbereiche den im Hohlraum befindlichen Bahnenden direkt gegenüberliegen.

4. Verfahren nach Anspruch 3, **dadurch gekennzeichnet, dass** vor dem "flip-chip" genannten Arbeitsablauf an den Anschlussbereichen beispielsweise aus Metall bestehende leitfähige Erhebungen ausgebildet werden.

5. Verfahren nach Anspruch 3 oder 4, **dadurch gekennzeichnet, dass** die Mikroschaltung (20) durch Anlöten ihrer Anschlussbereiche an die Enden der im Hohlraum befindlichen Bahnen befestigt wird.

6. Verfahren nach Anspruch 3 oder 4, **dadurch gekennzeichnet, dass** die Mikroschaltung (20) im Hohlraum angeklebt wird.

7. Verfahren nach Anspruch 6, **dadurch gekennzeichnet, dass** die Mikroschaltung (20) mit einem Isolierkleber angeklebt wird, und dass ihre Anschlussbereiche in elektrischem Kontakt mit den Enden der im Hohlraum befindlichen Bahnen sind.

8. Verfahren nach Anspruch 6, **dadurch gekennzeichnet, dass** die Mikroschaltung (20) mit einem anisotropischen Kleber angeklebt wird.

9. Verfahren nach Anspruch 1 oder 2, **dadurch gekennzeichnet, dass** die Mikroschaltung mit ihrer Fläche, die keine Anschlussbereiche aufweist, am Grund des Hohlraums befestigt wird, und dass die Anschlussbereiche durch Leiterdrähte mit den Enden der im Hohlraum befindlichen Bahnen verbunden werden.

10. Verfahren nach einem der vorhergehenden Ansprüche, **dadurch gekennzeichnet, dass** der Arbeitsablauf, der darin besteht, den Hohlraum und seine Verlängerung auszufüllen, darin besteht, diesen mit einem Schutzharz (22) von der Art zu füllen, die bei ultravioletten Strahlen polymerisiert, und den Träger einer solchen ultravioletten Strahlung auszusetzen.

11. Verfahren nach einem der vorhergehenden Ansprüche, **dadurch gekennzeichnet, dass** die Bahnen (17, 18) durch Tampondruck mit leitfähiger Tinte hergestellt werden.

12. Verfahren nach einem der vorhergehenden Ansprüche, **dadurch gekennzeichnet, dass** die Antenne (25) durch Tampondruck oder Siebdruck mit leitfähiger Tinte hergestellt wird.

13. Verfahren nach einem der Ansprüche 1 bis 11, **dadurch gekennzeichnet, dass** die Antenne durch Befestigen eines Leiterdrahts an der besagten Fläche hergestellt wird.

14. Verfahren nach einem der Ansprüche 1 bis 11, **dadurch gekennzeichnet, dass** die Antenne durch Heißprägen einer Folie aus leitfähigem Material hergestellt wird.

15. Verfahren nach einem der Ansprüche 2 bis 14, **dadurch gekennzeichnet, dass** die Schutzschicht (26) durch Aufkaschieren einer Folie aus Kunststoff angebracht wird.

16. Verfahren nach einem der Ansprüche 2 bis 14, **dadurch gekennzeichnet, dass** die Schutzschicht (26) durch Formgießen von Kunststoff auf dem flachen Träger gebildet wird.

17. Karte mit Mikroschaltung von der Art, die eine, eine Flachspule bildende Antenne umfasst, die mit der Mikroschaltung verbunden ist, wobei Letztgenannte Anschlussbereiche aufweist und in einem mit einem isolierenden Material (22) gefüllten Hohlraum untergebracht ist, der dazu bemessen ist, zumindest eine solche Mikroschaltung schützend aufzunehmen, **dadurch gekennzeichnet, dass** dieser mit isolierendem Material gefüllte Hohlraum eine seitliche Verlängerung (13) aufweist, die mit dem isolierenden Material gefüllt ist und sich bis in eine Zone erstreckt, in der sich die Antenne befindet, dass sich Leiterbahnen (17, 18) zwischen dem Grund des mit isolierendem Material gefüllten Hohlraums und einer Ebene erstrecken, auf der die Antenne verlegt ist, wobei sich eine der Bahnen am Grund der Verlängerung erstreckt, dass die Anschlussbereiche der Mikroschaltung an die Enden der im mit isolierendem Material gefüllten Hohlraum befindlichen Bahnen angeschlossen sind, während die Enden der Antenne (25) an die Enden der auf der besagten Ebene befindlichen Bahnen angeschlossen sind, und dass Teile der Antenne auf dem die Verlängerung füllenden isolierenden Material liegen.

18. Karte mit Mikroschaltung nach Anspruch 17, **dadurch gekennzeichnet, dass** die Ebene des Hohlraums, auf der die Antenne verlegt ist, mit einer Schutzschicht oder -folie (26) aus isolierendem Material bedeckt ist.

19. Karte mit Mikroschaltung nach Anspruch 17 oder 18, **dadurch gekennzeichnet, dass** die Mikroschaltung (20) mit der Rückseite so in dem Hohlraum angebracht ist, dass ihre Anschlussbereiche den im Hohlraum befindlichen Bahnenden direkt gegenüberliegen.

20. Karte mit Mikroschaltung nach Anspruch 18, **dadurch gekennzeichnet, dass** beispielsweise aus Metall bestehende leitfähige Erhebungen zwischen den Anschlussbereichen der Mikroschaltung und den entsprechenden Enden der Bahnen eingesetzt sind.

21. Karte mit Mikroschaltung nach Anspruch 19, **dadurch gekennzeichnet, dass** die Mikroschaltung (20) im Hohlraum angeklebt ist.

22. Karte mit Mikroschaltung nach Anspruch 19 oder 20, **dadurch gekennzeichnet, dass** die Mikroschaltung (20) mit einem Isolierkleber angeklebt ist, und dass ihre Anschlussbereiche in elektrischem Kontakt mit den Enden der im Hohlraum befindlichen Bahnen sind.

23. Karte mit Mikroschaltung nach Anspruch 19 oder 20, **dadurch gekennzeichnet, dass** die Mikroschaltung (20) mit einem anisotropischen Kleber angeklebt ist.

24. Karte mit Mikroschaltung nach Anspruch 17 oder 18, **dadurch gekennzeichnet, dass** die Mikroschaltung mit ihrer Fläche, die keine Anschlussbereiche aufweist, am Grund des Hohlraums befestigt ist, und dass die Anschlussbereiche durch Leiterdrähte mit den Enden der im Hohlraum befindlichen Bahnen verbunden sind.
